# EUROPEAN PATENT SPECIFICATION

(11) **EP 0 723 558 B1**
(45) Date of publication and mention of the grant of the patent: **05.08.1998**
(21) Application number: 95901621.3
(22) Date of filing: 05.10.1994
(51) Int. Cl.: C08F 10/00, C08F 4/605

(54) **PROCESS FOR THE POLYMERIZATION OF AN OLEFIN IN THE PRESENCE OF A CATALYST SYSTEM COMPRISING A HALOGEN METALLOCENE**
VERFAHREN ZUR OLEFINPOLYMERISATION IN GEGENWART EINES HALOGENIERTEN METALLOCENE ENTHALTENDES KATALYSATORSYSTEM
PROCEDE POUR LA POLYMERISATION D'UNE OLEFINE EN PRESENCE D'UN SYSTEME DE CATALYSEUR COMPRENANT UN METALLOCENE D'HALOGENE

(30) Priority: 11.10.1993 BE 9301067
(43) Date of publication of application: 31.07.1996
(73) Proprietor: DSM N.V., 6411 TE Heerlen (NL)
(72) Inventor: VAN DOREMAELE, Gerardus, Henricus, Josephus, NL-6132 HN Sittard (NL); VAN BEEK, Johannes, Antonius, Josephus, NL-6211 NB Maastricht (NL); POSTEMA, Rutgerus, Antonie, Jacobus, NL-6161 EN Geleen (NL)
(86) International application number: NL9400242
(87) International publication number: WO9510546

(56) References cited:
- EP-A- 0 500 944
- EP-A- 0 513 380
- DIE MAKROMOLEKULARE CHEMIE, RAPID COMMUNICATIONS, vol.14, no.2, February 1993 pages 109 - 114, XP334497 JAMES C.W. CHIEN 'Olefin copolymerization and olefin/diene terpolymerization with a zirconium catalyst system'

## Description

The invention relates to a process for the polymerization of an olefin in the presence of a catalyst system comprising a halogen metallocene.

It is known that metallocene compounds are active as a catalyst component in the polymerization of olefin(s). They offer high activity in such a polymerization of olefins, provided that they are used in combination with a second catalyst component, hereinafter referred to as co-catalyst. The combination of a metallocene compound with a linear or cyclic aluminoxane as a co-catalyst is known from EP-A-69,951. The combination of a metallocene compound and aluminoxane has also been described in many other publications. A disadvantage of using aluminoxanes as co-catalysts is that it is necessary to employ a large quantity of co-catalyst relative to the metallocene compound. This generally leads to a high residual aluminium content in the product of the polymerization, the polyolefin.

It is also known, for example from EP-A-468,537, to employ a compound forming a stable anion as a co-catalyst beside a metallocene catalyst. An example of a suitably stable anion is tetrakis(pentafluorophenyl)borate. A catalyst system incorporating a co-catalyst that forms a stable anion is referred to as an ionic catalyst system. Ionic systems have the advantage that no large quantities of aluminoxanes need to be used as co-catalyst. Ionic metallocene systems are described in many publications, for example in WO91/09882, WO91/12285 and W092/05208, to which the reader is referred.

A drawback of ionic catalyst systems is that the metallocene compound from which the catalyst is formed must be a metallocene dialkyl compound. Metallocene dialkyl compounds are difficult to maintain since they decompose easily. For this reason, the required metallocene dialkyl compound is usually prepared immediately before the polymerization by alkylating a halogen metallocene with an alkylating agent such as methyllithium or a methyl Grignard reagent. A method for preparing a stable catalyst starting from a halogen metallocene is known from EP-A-500,944. The latter contains a description, amongst other things, of catalysts obtained from:
a) a halogen metallocene
b) a co-catalyst which can form a stable anion under polymerization conditions and
c) an aluminium-containing alkylating agent.
Some activity is found when an olefin is polymerized without using aluminoxane. However, the activity is not high enough. Moreover, it is necessary to add a large amount of aluminium-containing alkylating agent. The sequence of addition of the components started from is also critical. See, for example, Comparative Example 3 of EP-A-500,944. In addition, trimethylaluminium cannot be used as an alkylating agent (see Example 1 from EP-A-500,944).

The object of the invention is to provide a metallocene catalyst system for olefin polymerization with a high activity, the said catalyst system resulting in a polymer with a low residual aluminium content. The invention also relates to a simple method for preparing the catalyst from stable components.

According to the invention this object is achieved through the polymerization of an olefin in the presence of a catalyst system comprising:
a) a halogen metallocene
b) a co-catalyst which can form a stable anion under polymerization conditions through the reaction of the co-catalyst with the reaction product of the halogen metallocene and the alkylating agent and
c) an aluminium-containing alkylating agent,
characterised in that the aluminium-containing alkylating agent is a mixture or reaction product of an alkyl aluminium compound and an alcohol.

According to the invention, it is possible to obtain higher polymerization activity than by using the process described in EP-A-500,944. The quantity of aluminium-containing alkylating agent that must be added is considerably smaller than when the process in EP-A-500,944 is employed. Furthermore it has proved to be possible to use trimethylaluminium as an alkylating agent. In addition the sequence of addition of the co-catalyst, halogen metallocene and aluminium-containing alkylating agent is less critical than in the process described in EP-A-500,944. The polyolefins which are prepared have a low residual catalyst content, including a low residual aluminium content.

According to the invention, "halogen metallocene" means a coordination compound of a metal from group 4, 5 or 6 of the Periodic Table of the Elements and having at least one halogen atom attached to the metal, with the coordination compound containing one or more substituted or unsubstituted η₅- cyclopentadienyl groups. The Periodic Table of the Elements is understood to be the IUPAC version (New Notation), as printed on the jacket of the Handbook of Chemistry and Physics, 70th edition, CRC Press, 1989-1990. According to the invention, "η₅-cyclopentadienyl groups" is understood to include fluorenyl or indenyl groups.

The η₅-cyclopentadienyl groups in the coordination compound can be the same or different.

The following abbreviations are used: Cp for a cyclopentadienyl group, Ind for an indenyl group and Flu for a fluorenyl group. The η₅-cyclopentadienyl groups can be substituted in such a way that they are structurally attached to each other. Such compounds are known as bridged metallocenes. It is also possible for the halogen metallocene to contain only one η₅-cyclopentadienyl group which has a substituent that can coordinate with the metal. Halogen metallocenes which can be used according to the invention are listed under halides in Table 1 on page 7 of EP-A-420,436. Preference is given to halogen metallocenes containing a transition metal chosen from the group comprising Ti, Zr and Hf.

It is preferable to employ a chloride, bromide, iodide or a fluoride as the halide in the halogen metallocene. Specifically, the halogen metallocene is a dihalide, since dihalides exhibit great stability under storage conditions and are easy to prepare. Examples of halogen metallocenes which can be used according to the invention are also given in EP-A-500,944, page 3, line 49 to page 7, line 5.

The co-catalyst of the invention is a compound which can form a stable anion under polymerization conditions. The stable anion is formed through the reaction of the co-catalyst with the reaction product of the halogen metallocene and the alkylating agent. The co-catalyst can be represented by the following general formula:

[Q]ₘ[y]ₙ

where Q is the cationic component and Y the anionic component of the co-catalyst which forms the stable anion. m and n are positive integers. The cationic component is chosen for example from the following cations: carbonium, tropylium, ammonium, oxonium, sulphonium, phosphonium, triphenylphosphonium, diphenylcarbonium, cycloheptatrienylium, indenium, triethylammonium, tripropylammonium, tributylammonium, N-N-dimethylanilinium, dipropylammonium, dicyclohexylammonium, triphenylphosphonium, trimethylsulphonium, tris(dimethylphenyl)phosphonium, tris(methylphenyl)phosphonium, triphenylsulfonium, triphenyloxonium, triethyloxonium, pyrylium and the cations of silver, gold, platinum, copper, palladium, mercury and ferrocene.

The anionic component Y forms a stable anion when the co-catalyst reacts with the alkylating agent or the reaction product of the halogen metallocene and the alkylating agent. Suitable anionic components are organoboron, organoaluminium, organogallium, organophosphorus, organoarsenic and organoantimony. Examples of such anionic components are tetraphenylboron, tetrakis(3,4,5-trifluorophenyl)boron, tetrakis(3,5-difluorophenyl)boron, tetrakis(3,5-di(t-butyl)-phenyl)-boron, tetrakis(pentafluorophenyl)boron, tetraphenylaluminium, tetrakis(3,4,5-trifluorophenyl)aluminium, tetrakis(3,5-di(t-butyl)phenyl)aluminium, tetrakis(pentafluorophenyl)aluminium, tetraphenylgallium, tetrakis(3,4,5-trifluorophenyl)gallium, tetrakis-(trifluoromethyl)phenyl)gallium, tetrakis(3,5-di(t-butyl)phenyl)gallium, tetrakis(pentafluorophenyl)gallium, tetraphenylphosphorus, tetrakis(pentafluorophenyl)-phosphorus, tetraphenyl arsenic, tetrakis(pentafluorophenyl) arsenic, tetraphenyl antimony, tetrakis(pentafluorophenyl) antimony, decaborate, undecaborate, carbadodecaborate and decachlorodecaborate.

The quantity of co-catalyst used depends on the chosen co-catalyst and can be determined by means of simple experiments. In particular the quantity of co-catalyst is such that the molar ratio of halogen metallocene and co-catalyst is 0.1-10, more specifically 0.5-3.0.

The alkylating agent of the invention is a a mixture or reaction product of an alkylaluminium compound and an alcohol. The alcohol can be a monohydric or a polyhydric alcohol. It is preferable to employ a linear or branched C1-C12 alcohol. Particularly suitable as an alkylating agent is the reaction product of trimethyl aluminium, triethyl aluminium or triisobutyl aluminium and methanol or ethanol. In general, the alkylating agent is composed in such a way that the OH/Al molar ratio (ratio between the OH-groups in the alcohol and Al) is 0.1-10. Depending of the compounds of the catalyst system used, an optimum is present in the amount of alcohol to be used, relative to the amount of aluminium alkyl. This optimum lies in several cases between an OH/Al ratio of 0.25 and 4.

The quantity of alkylating agent should be such that almost all the halogen metallocene is alkylated. If insufficient alkylating agent is present, the catalyst activity is too low. It is preferable to use such a quantity of alkylating agent that the molar ratio between aluminium and halogen metallocene is greater than or equal to 10, more preferably between 10-50.

The reaction of the halogen metallocene, the alkylating agent and the co-catalyst can take place in different ways. The sequence of addition to the catalyst suspension or the polymerization reactor is generally not critical. Often, the best results are obtained when the co-catalyst is only introduced into the reactor after the other components of the catalyst system. This method for introducing the catalyst components results in increased catalyst activity.

The catalyst of the invention can be used as a catalyst component in the polymerization of olefins in accordance with prior art methods for metallocenes, in particular in the polymerization of olefins chosen from the α-olefins group, internal olefins or diolefins. Mixtures of these can also be employed.

The process of the invention is particularly suitable for polymerizing α-olefins. The α-olefins are preferably chosen from the group comprising ethylene, propylene, butylene, pentene, heptene and octene, the use of mixtures also being possible. It is more preferable to employ ethylene and/or propylene as the α-olefin. The use of such olefins results in the formation of crystalline polyethylene homopolymers and copolymers having both high and low density, (HDPE, LDPE, LLDPE) and polypropylene homopolymers and copolymers (PP and EMPP). The monomers required for such products and the processes to be employed are known to a person skilled in the art.

The process of the invention is also suitable for the preparation of amorphous or rubbery copolymers based on ethylene and another α-olefin. It is preferable to use propylene as the other α-olefin, so that EPM-rubber is formed. It is also readily possible to use a diene in addition to ethylene and the other α-olafin, so that a so-called EADM rubber is formed, in particular EPDM (ethylene-propylene-diene rubber).

The catalysts of the invention can be supported on a carrier or employed without a carrier. Catalysts supported on a carrier are mainly used in gas-phase and slurry processes. The carrier is any carrier which is known as a carrier for metallocene catalysts, for example SiO₂ or Al₂O₃.

The catalysts are particularly suitable for use as unsupported catalysts in solution polymerization processes. In solution polymerization the commonly known solvents can be used. It is preferable to use aliphatic hydrocarbons, such as hexane and heptane, and mixtures of aliphatic hydrocarbons.

When an aliphatic hydrocarbon is used as a solvent, the solvent can still contain small quantities of aromatic hydrocarbons, for example toluene.

In the case of the solution polymerization of ethylene or ethylene with other α-olefins and/or nonconjugated dienes up to a comonomer content of 25%, reactor temperatures of at least 130°C are used to keep the produced polymer in solution. With comonomer percentages on a weight basis of 30 - 80 %, the catalysts of the invention supply such a homogeneous product that polymerization can be carried out at much lower reactor temperatures (≥ 30°C) without the formed polymer being precipitated from the solution. Other suitable α-olefins are, for example, propylene, butylene, hexene and octene.

The olefin can be polymerised in the known way, in both a gas phase and a liquid reaction medium. For the latter, both solution and suspension polymerization can be used.

The process of the invention will be explained hereinafter with reference to the preparation of polyethylene, known from prior art, which is representative of the olefin polymerizations under consideration. For the preparation of other polymers on the basis of an olefin, the reader is expressly referred to the numerous publications on the subject.

The polymerization reaction is generally carried out at a temperature of between -40 and 200°C, preferably between 10 and 180°C. The pressure will generally be 0.1-5 MPa but higher or lower pressures can be used. It is preferable to carry out the process continuously, but it can also be conducted semi-continuously or batchwise.

The residence time can range from a few seconds to a few hours. In general, a residence time of between a few minutes and an hour will be chosen.

The polymerization can be carried out in a liquid which is inert with respect to the catalyst, for example one or more aliphatic saturated hydrocarbons, such as butane, pentane, hexane, heptane, pentamethylheptane or petroleum fractions; aromatic hydrocarbons, for example benzene or toluene, or halogenated aliphatic or aromatic hydrocarbons, for example tetrachloroethylene. It is possible to use such a temperature and pressure that one or more of the monomers employed, in particular the α-olefin, for example propylene, is liquid and present in such a large quantity that it functions as a dispersing medium. In that case, another dispersing medium is unnecessary. The process of the invention can be carried out either in a polymerization reactor filled with gas and liquid or in a reactor completely filled with liquid. By making use of a heterogenized catalyst, it is possible to carry out the polymerization process in a suspension or in the gas phase.

The molecular weight can be controled using techniques known to a person skilled in the art. In particular this can be accomplished by using chain terminating agents, such as diethylzinc, preferably with hydrogen. Even very small quantities of hydrogen influence the molecular weight to a sufficient degree.

After the polymerization, the polymer can be recovered in various ways. Both the evaporation of the solvent and steam coagulation can be used for this purpose in liquid phase processes.

The process of the invention is also suitable for the preparation of amorphous copolymers of olefins. The amorphous copolymers obtained according to the process of the invention generally contain between 25 and 85 wt.-% ethylene. However it is preferable to prepare products with an ethylene content of between 40 and 75 wt.-%.

The invention will be explained hereinafter with reference to the following examples and comparative experiments. The results of the polymerization in the examples are expressed by means of two parameters which have the following meaning:
T jump: temperature rise that occurs in the polymerization reactor during polymerization. This is indicative of catalyst activity.
PE yield: quantity of polyethylene (PE) produced in a specified time (5 minutes). The PE yield is a measure of the catalyst activity.

### Example I, Synthesis of rac-(1.2-ethvlene (bis-(1-Ind))ZrCl₂

32.7 ml of a 1.6 M solution of butyl lithium in hexane was added to a cooled solution (-56°C) of 6.75 g (26.1 mmol) of 1,2-ethylene(bis-(1-indene)) in 120 ml of diethylether in a Schlenk flask. The precipitate formed was filtered off and washed with 120 ml of hexane, suspended in 80 ml of dimethoxyethane and cooled to -20°C. After cooling to -56°C, the suspension was added to a suspension of 5.78 g zirconium tetrachloride, cooled to -56°C, in 40 ml of dimethoxyethane. After some time, a yellow precipitate was formed, which was filtered off and vacuum dried. The yield was 65% rac-(1,2-ethylene(bis-(1-indenyl)) zirconium dichloride.

### Example I

### Polymerization of ethylene

A 1.3 litre autoclave was filled with 450 ml of pentamethylheptane. The reactor was pressurized to 2 MPa by introducing ethylene and the reactor contents were preheated to 165°C. 5 ml of toluene, 5 ml of a 0.04 M solution of an aluminium alkyl compound in gasoline and 1 ml of a 0.2 M alcohol solution in gasoline were successively introduced into a tank. The molar ratios are given in Table 1. After stirring for 1 minute, 1 ml of a 0.01 M slurry of the rac-1,2-ethylene(bis-(1-indenyl)) zirconium dichloride in gasoline, obtained as described above, was added. After stirring for a minute, a [DMAH][BF20](dimethylanilinium tetrakis(pentafluorophenyl) boron) slurry in gasoline was added. After stirring for another minute, the catalyst mixture obtained in this way was dosed to the reactor at 165°C with 50 ml of pentamethylheptane. During the polymerization the temperature in the reactor rose. After 5 minutes the polyethylene solution was drained off and the product was worked up and dried. For the results see Table 1.

### Comparative experiment A

The polymerization was carried out as in Example I, using the same catalyst, but without the addition of the alcohol. No polymerization activity was observed.

### Examples II and III

The procedures followed were analogous to that of Example I, but the amount of alcohol was changed such that the molar quantities of alcohol with respect to aluminium in the alkylating agent were 2 and 0.5 respectively instead of 1. As can be seen from the results of Examples I-III, an optimum in the Alcohol/Aluminium ratio is present.

### Example IV

The catalyst and the polymerization were as in Example I, but the alcohol employed was 2-ethyl-1-hexanol instead of methanol. See Table 1.

**Table 1:**

| Polymerization of ethylene in the presence of a catalyst system from rac-(1,2-ethylene(1-Ind)₂)ZrCl₂, [DMAH][BF20], trimethylaluminium (TMA) and alcohol; ratio [DMAH][BF20]/Zr= 2, Al/Zr= 20. | | | | |
|---|---|---|---|---|
| Example/experiment | Alcohol type | Molar ratio Alcohol/Al | T-rise (°C) | PE yield (g) |
| I | methanol | 1 | 43 | 15 |
| A | - | - | O | 0 |
| II | methanol | 2 | 0 | 0 |
| III | methanol | 0.5 | 17 | 4 |
| IV | 2-ethyl-1-hexanol | 1 | 47 | 16 |

### Example V

### Synthesis of 1,2-ethylene(Cp)(2-Ind)ZrCl₂

The synthesis of ethylene(Cp)(2-Ind)ZrCl₂ was carried out in accordance with steps V.1 - V.4 described below.

### V.1 Synthesis of ethyl(2-indene)acetate

At 15°C, a solution of 31.3 g of triethylphosphonoacetate in 75 ml of THF was evenly metered over a period of 1 hour 15 minutes into a suspension of 3.30 g of sodium hydride in 200 ml of tetrahydrofuran (THF). The mixture was then stirred for a further 30 minutes at room temperature. A solution of 18.1 g of 2-indanone in 75 ml of THF was metered into this mixture over a period of 1 hour with cooling using a water bath. The mixture was then stirred for 45 minutes at room temperature. Working-up: the reaction mixture was poured into water, the water and reaction mixture were subjected to an extraction process, using diethylether, the ether layer was dried on a bed of magnesium sulphate and the resulting mixture was then filtered and the filtrate evaporated. The yield was 27.4 g of crude reaction product. After distillation under vacuum, 22.4 g (80%) of ethyl(2-indene)acetate was obtained.

### V.2 Synthesis of 2(2-indene)ethanol

At room temperature, a solution of 7.0 g of ethyl(2-indene) acetate in 50 ml of diethylether was added dropwise to a suspension of 1.41 g of lithium aluminium hydride in 100 ml of diethylether. The temperature rose to 30°C; the total dosing time was 60 minutes. The mixture was stirred for 30 minutes at room temperature. Next 25 ml of water was added and the mixture was stirred for 15 minutes. After the mixture was poured into ice and concentrated sulphuric acid was added, the product was worked up. The product was purified over a silica column (mobile phase: hexane). The yield was: 4.0 g of pure 2(2-indene)ethanol (72 %).

### V.3.Synthesis of 1-bromo-2(2-indene)ethane

11.8 g of triphenylphosphine was added to a solution of 7.1 g of 2(2-indene)ethanol in 100 ml of THF and 8.0 g of N-bromosuccinimide was subsequently added in small amounts at room temperature. The total dosing time was 1 hour. Stirring was then continued for 30 minutes at room temperature. The reaction mixture was poured out into 300 ml of hexane and the formed precipitate was filtered off and washed twice with 50 ml of hexane. The combined hexane fractions were evaporated and the product was purified over a silica column (mobile phase:hexane). The yield was: 7.9 g of 1-bromo-2(2-indene)ethane (80%).

### V.4.Synthesis of 1-cyclopentadiene-2(2-indene)ethane

At -35°C, a solution of 18.2 g of 1-bromo-2(2-indene)ethane in 100 ml of THF was added over a period of two hours to a solution of 120 mmol cyclopentadiene sodium (NaCp) in 260 ml THF. Stirring was then carried out for a further 30 minutes at this low temperature and subsequently for 16 hours at room temperature. After the addition of water, the evaporation of THF, extraction using diethylether, the drying of the organic layers and the evaporation of the solvent, the product was purified over silica (mobile phase: petroleum ether boiling range 40-60°c). Yield: 7.1 g of (41 %) 1-cyclopentadiene-2(2-indene)ethane.

### V.5.Synthesis of 1,2-ethylene (1-cyclopentadienyl) (2-indenyl)zirconium dichloride

The synthesis of the metallocene compound was carried out as in Example I, but in this case with: 2.94 g of 1-cyclopentadiene-2(2-indene)ethane, 17.6 ml of 1,6 M n-butyllithium (BuLi) in hexane, and 3.2 g of zirconium tetrachloride.

5.05 g of solid light-yellow compound, 1,2-ethylene(Cp)(2-Ind)ZrCl₂, was obtained. A portion of the product was freed from lithium chloride by extraction using dichloromethane. Taking into account 2 equivalents LiCl the yield of crude product was 83%. Extraction of 2.05 g of crude product (containing LiCl) with 100 ml of CH₂Cl₂ gave 1.3 g of pure product.
1H NMR in CDCl₃ : 7.5 (m, 2H, of Cp), 7.2 (m, 2H, of Cp), 6.5 (t, 2H, C6 of Ind), 6.2 (s, 2H, C5 of Ind), 6.1 (t, 2H, C6 of Ind), 3.15 (s, 4H, of ethylene)

### Example V

### Polymerization

The polymerization was carried out as in Example I, but with 1,2-ethylene(Cp)(2-Ind)ZrCl₂, triethylaluminium (TEA) and 2-ethyl-1-hexanol as elements of the catalyst system. The metallocene concentration in the reactor was 0.02 mM. The molar ratio alcohol/Al was 1/10. The results are given in Table 2.

### Comparative experiment B

As Example V, but without 2-ethyl-1-hexanol. The results are given in Table 2.

### Examples VI and VII

As Example V, but with different amounts of 2-ethyl-1-hexanol. See Table 2.

### Example VIII

As example VII, but with trimethylaluminium (TMA) as the co-catalyst.

### Comparative experiment C

As Example VIII, but without using alcohol. This gave a very low activity (see Table 2).

### Examples IX-XI

In these examples TEA and pentaerythritol (C(CH₂OH)₄, 0.2 M slurry in gasoline) were used in different molar ratios of alcohol and aluminium. See Table 2. The activity is lower than when 2-ethyl-1-hexanol is used.

**Table 2:**

| Polymerization of ethylene in the presence of the catalyst 1,2-ethylene(Cp)(2-Ind)ZrCl₂, [DMAH][BF20], aluminium alkyl (trimethylaluminium (TMA) or triethylaluminium (TEA)) and alcohol; ratio [DMAH][BF20]/[Zr] = 2, [Al]/[Zr] = 20. | | | | | | |
|---|---|---|---|---|---|---|
| Ex. | Aluminium alkyl type | Alcohol type | Molar ratio Alcohol/Al | Molar ratio OH/Al | T-jump (°C) | PE yield (g) |
| V | TEA | 2-ethyl -1-hexanol | 0.1 | 0,1 | 32 | 11 |
| B | TEA | - | - | - | 26 | 10 |
| VI | TEA | 2-ethyl -1-hexanol | 0.5 | 0,5 | 45 | 14 |
| VII | TEA | 2-ethyl -1-hexanol | 1 | 1 | 65 | 39 |
| VIII | TMA | 2-ethyl -1-hexanol | 1 | 1 | 62 | 33 |
| C | TMA | - | - | - | 14 | 2 |
| IX | TEA | pentaerythritol | 0.25 | 1 | 34 | 8 |
| X | TEA | pentaerythritol | 0.5 | 2 | 42 | 16 |
| XI | TEA | pentaerythritol | 1 | 4 | 15 | 2 |

### Example XII

### Polymerization of ethylene at lower reactor temperature

The catalyst as prepared in Example V was used for the polymerization of ethylene at a reactor temperature of 50°C. The reactor was a 1.5 litre autoclave, the dispersing medium was 500 ml of gasoline. The reactor was filled with ethylene to an ethylene pressure of 0.7 MPA. Triethylaluminium in a concentration of 4*10⁻⁴mol/l was added to the dispersing medium to render impurities in the reactor harmless ("scavenger"). In a catalyst preparation vessel, aluminium alkyl, alcohol, metallocene compound and co-catalyst were successively premixed in a molar ratio of 20:20:1:3. The catalyst mixture was subsequently introduced into the reactor. The concentration of metallocene compound in the reactor was 5*10⁻⁶ mol/l. The concentration of co-catalyst ([DMAH][BF20]) was 1.5*10⁻⁵ mol/l. After a polymerization time of 9 minutes the polymer was recovered, treated with methanol and vacuum dried at 60°C. For the results see Table 3.

### Example XIII and Comparative Experiment E

This example and the comparative experiment were carried out as Example XII, with the aluminium alkyl compound and alcohol indicated in Table 3. For the results see Table 3. When no alcohol is added hardly any polymerization activity is observed.

**Table 3 :**

| Polymerization of ethylene at 50°C in the presence of 1,2-ethylene (Cp)(2-Ind)ZrCl₂ catalyst | | | |
|---|---|---|---|
| Ex | Aluminium alkyl type | Alcohol type | Catalyst activity (kgPE/gZr*5 min) |
| XII | TEA | 2-ethyl-1-hexanol | 15 |
| E | TEA | - | 3 |
| XIII | TMA | 2-ethyl-1-hexanol | 16 |

It has been found experimentally that both the co-catalyst and the alkylating agent are essential for achieving sufficiently high catalyst activity in the polymerization of olefins. When adding the co-catalyst, alkylating agent and halogen metallocene to the reactor, it is preferable to employ a sequence such that the alkylating agent and the co-catalyst are not brought into contact first.

## Claims

1. Process for the polymerization of an olefin in the presence of a catalyst system comprising:
a) a halogen metallocene
b) an aluminium-containing alkylating agent
c) a co-catalyst which forms a stable anion through the reaction of the co-catalyst with the reaction product of the halogen metallocene and the alkylating agent,
characterised in that the aluminium-containing alkylating agent is a mixture or reaction product of an alkyl aluminium compound and an alcohol.

2. Process according to claim 1, characterised in that the alkyl aluminium compound is chosen from trimethylaluminium, triethylaluminium or triisobutylaluminium.

3. Process according to any of claims 1-2, characterised in that the quantity of co-catalyst is such that the halogen metallocene/co-catalyst molar ratio is 0.1-10.

4. Process according to claim 3, characterised in that the quantity of co-catalyst is such that the halogen metallocene/co-catalyst molar ratio is 0.5-3.0.

5. Process according to any of claims 1-4 characterised in that the quantity of alkylating agent is such that the Al/halogen metallocene ratio is greater than or equal to 10.

6. Process according to claim 5, characterised in that the Al/halogen metallocene ratio is 10-50.

7. Process according to any of claims 1-6, characterised in that the alkylating agent comprises an alcohol with 1-12 C-atoms.

8. Process according to any of the claims 1-7 characterised in that the halogen metallocene contains a transition metal, chosen from the group comprising Ti, Zr and Hf.

9. Catalyst system suitable for the polymerization of an olefin comprising:
a) a halogen metallocene
b) a co-catalyst which forms a stable anion through the reaction of the co-catalyst with the reaction product of the halogen metallocene and the alkylating agent,
c) an aluminium-containing alkylating agent, characterised in that the aluminium-containing alkylating agent is a mixture or reaction product of an alkyl aluminium compound and an alcohol.

## Patentansprüche

1. Verfahren zur Polymerisation eines Olefins in Gegenwart eines Katalysatorsystems, umfassend:
a) ein Halogenmetallocen,
b) ein Aluminium enthaltendes Alkylierungsmittel,
c) einen Cokatalysator, der durch die Reaktion des Cokatalysators mit dem Reaktionsprodukt des Halogenmetallocens und des Alkylierungsmittels ein stabiles Anion bildet,
dadurch gekennzeichnet, daß das Aluminium enthaltende Alkylierungsmittel ein Gemisch oder Reaktionsprodukt einer Alkylaluminiumverbindung und eines Alkohols darstellt.

2. Verfahren nach Anspruch 1, dadurch gekennzeichnet, daß die Alkylaluminiumverbindung ausgewählt ist aus Trimethylaluminium, Triethylaluminium oder Triisobutylaluminium.

3. Verfahren nach einem der Ansprüche 1-2, dadurch gekennzeichnet, daß die Menge des Cokatalysators so ausgelegt ist, daß das Molverhältnis von Halogenmetallocen/Cokatalysator 0,1-10 ist.

4. Verfahren nach Anspruch 3, dadurch gekennzeichnet, daß die Menge des Cokatalysators so ausgelegt ist, daß das Molverhältnis von Halogenmetallocen/Cokatalysator 0,5-3,0 ist.

5. Verfahren nach einem der Ansprüche 1-4, dadurch gekennzeichnet, daß die Menge des Alkylierungsmittels so ausgelegt ist, daß das Verhältnis von Al/Halogenmetallocen größer als oder gleich 10 ist.

6. Verfahren nach Anspruch 5, dadurch gekennzeichnet, daß das Verhältnis von Al/Halogenmetallocen 10-50 ist.

7. Verfahren nach einem der Ansprüche 1-6, dadurch gekennzeichnet, daß das Alkylierungsmittel einen Alkohol mit 1-12 C-Atomen umfaßt.

8. Verfahren nach einem der Ansprüche 1-7, dadurch gekennzeichnet, daß das Halogenmetallocen ein Übergangsmetall, ausgewählt aus der Gruppe, umfassend Ti, Zr und Hf, enthält.

9. Katalysatorsystem, geeignet zur Polymerisation eines Olefins, umfassend:
a) ein Halogenmetallocen,
b) einen Cokatalysator, der durch die Reaktion des Cokatalysators mit dem Reaktionsprodukt des Halogenmetallocens und des Alkylierungsmittels ein stabiles Anion bildet,
c) ein Aluminium enthaltendes Alkylierungsmittel, dadurch gekennzeichnet, daß das Aluminium enthaltende Alkylierungsmittel ein Gemisch oder Reaktionsprodukt einer Alkylaluminiumverbindung und eines Alkohols darstellt.

## Revendications

1. Procédé pour la polymérisation d'une oléfine en présence d'un système catalytique comprenant :
a) un métallocène halogéné
b) un agent d'alcoylation contenant de l'aluminium
c) un co-catalyseur qui forme un anion stable par la réaction du co-catalyseur avec le produit de réaction du métallocène halogéné et de l'agent d'alcoylation,
caractérisé en ce que l'agent d'alcoylation contenant de l'aluminium est un mélange ou un produit de réaction d'un alcoylaluminium et d'un alcool.

2. Procédé selon la revendication 1, caractérisé en ce que l'alcoylaluminium est choisi parmi le triméthylaluminium, le triéthylaluminium et le triisobutylaluminium.

3. Procédé selon l'une quelconque des revendications 1-2, caractérisé en ce que la quantité de co-catalyseur est telle que le rapport molaire du métallocène halogéné au co-catalyseur soit compris entre 0,1 et 10.

4. Procédé selon la revendication 3, caractérisé en ce que la quantitté de co-catalyseur est telle que le rapport molaire du métallocène halogéné au co-catalyseur soit compris entre 0,5 et 3,0.

5. Procédé selon l'une quelconque des revendications 1-4, caractérisé en ce que la quantité d'agent d'alcoylation est telle que le rapport Al/métallocène halogéné soit supérieur ou égal à 10.

6. Procédé selon la revendication 5, caractérisé en ce que le rapport Al/métallocène halogéné est compris entre 10 et 50.

7. Procédé selon l'une quelconque des revendications 1-6, caractérisé en ce que l'agent d'alcoylation comprend un alcool ayant 1-12 atomes de carbone.

8. Procédé selon l'une quelconque des revendications 1-7, caractérisé en ce que le métallocène halogéné contient un métal de transition choisi dans le groupe comprenant Ti, Zr et Hf.

9. Système catalytique utilisable pour la polymérisation d'une oléfine comprenant :
a) un métallocène halogéné,
b) un co-catalyseur qui forme un anion stable par la réaction du co-catalyseur avec le produit de réaction du métallocène halogéné et de l'agent d'alcoylation,
c) un agent d'alcoylation contenant de l'aluminium,
caractérisé en ce que l'agent d'alcoylation contenant de l'aluminium est un mélange ou un produit de réaction d'un alcoylaluminium et d'un alcool.
